# FASCICULE DE BREVET EUROPEEN

(11) **EP 0 674 203 B1**
(45) Date de publication et mention de la délivrance du brevet: **01.09.1999**
(21) Numéro de dépôt: 95400595.5
(22) Date de dépôt: 17.03.1995
(51) Int. Cl.: G02B 27/00

(54) **Dispositif de rangement d'une glace holographique, notamment pour aéronefs**
Vorrichtung zur Aufbewahrung eines holographischen Spiegels, besonders für Luftfahrzeuge
Storage device for a holographic mirror, in particular for aircraft

(30) Priorité: 25.03.1994 FR 9403549
(43) Date de publication de la demande: 27.09.1995
(73) Titulaire: SEXTANT AVIONIQUE, 92360 Meudon-la-Forêt (FR)
(72) Inventeur: David, Jean-François, F-92402 Courbevoie Cedex (FR); Gerbe, Jean-Pierre, F-92402 Courbevoie Cedex (FR)
(74) Mandataire: Benoit, Monique

(56) Documents cités:
- WO-A-87/01090
- US-A- 3 945 716
- US-A- 4 749 256

## Description

La présente invention concerne un dispositif de rangement pour une glace holographique destiné notamment à être monté sur des aéronefs.

Une telle glace fait partie d'un combineur holographique qui a pour rôle essentiel de présenter, devant les yeux d'un pilote, des images lumineuses collimatées à l'infini en superposition sur le paysage extérieur. Ces images sont produites en relief en utilisant les interférences entre deux faisceaux laser, selon le principe connu de l'holographie. Elles sont issues d'un projecteur disposé en amont du combineur et dont la position relative par rapport à une glace holographique, est fixe lorsque cette dernière est opérationnelle.

Les combineurs du type de celui précité sont généralement maintenus et positionnés par l'intermédiaire d'un dispositif mécanique et montés en plafond dans la cabine de pilotage de l'aéronef. Ils sont de plus montés de façon escamotable car le système de collimation d'images holographiques n'étant utilisé que pendant quelques phases de vol, le combineur doit pourvoir se ranger le reste du temps dans une zone qui altère au minimum le champs de vision extérieur du pilote d'une part et qui permet d'éviter les chocs entre le pilote et le combineur d'autre part.

Il existe des dispositifs mécaniques de maintien et de positionnement de combineurs holographiques, mais ces dispositifs ne permettent pas l'escamotage intégral des combineurs, une partie du mécanisme restant dans la zone de sécurité de la tête du pilote, une fois le rangement effectué. Ces dispositifs connus sont constitués par deux bras disposés de part et d'autre de la glace holographique et sont reliés à une partie fixe supérieure du plafond de la cabine. Dans ce type de combineurs connus, la glace holographique est solidaire des bras qui la supporte, ce qui a pour inconvénient de constituer un ensemble de grand encombrement, pénalisant lors du rangement de l'ensemble. Cela a pour conséquence notamment de rendre l'escamotage complet difficile. De plus, la longueur engendrée par cette succession d'éléments peut obliger le pilote à avoir un mouvement de recul pour autoriser leur passage au moment du rangement ou d'une mise en position opérationnelle du combineur. Un tel mouvement peut s'avérer néfaste au pilotage de l'appareil.

Une demande de brevet européen 0.279.532 présente un système de rangement mais celui-ci est complexe et nécessite au moins deux mouvements pour ranger la glace holographie, plus précisément un mouvement de translation de la glace le long d'un axe rectiligne et un mouvement de rotation de la glace autour d'un autre axe pour parfaire le rangement.

WO 87/01090 montre un dispositif d'escamotage d'une glace holographique commandé par une canne se déplaçant sur une glissière rectiligne.

Le but de l'invention est de pallier les inconvénients préçités pour permettre notamment le rangement de la glace holographique hors du champ de vision de l'opérateur par un geste simple et rapide de celui-ci sans nécessiter pour cela un mécanisme complexe.

A cet effet, l'invention a pour objet un dispositif de rangement d'une glace holographique, caractérisé en ce qu'il comporte au moins une glissière courbe, des moyens pour glisser sur la glissière d'une position donnée quelconque à une position donnée de rangement, ces moyens étant solidaires de la glace holographique, et des moyens pour maintenir la glace holographique dans la position de rangement.

L'invention a pour principaux avantages qu'elle assure la position opérationnelle du combineur avec une bonne répétitivité de mise en place en créant le minimum de masquage visuel, qu'elle assure le rangement du combineur au maximum hors du champ de vision extérieur du pilote, qu'elle assure l'escamotage du combineur vers l'avant en cas de choc lorsque le combineur est opérationnel, qu'elle est économique et qu'elle est simple à mettre en oeuvre.

D'autres caractéristiques et avantages de l'invention apparaîtront à l'aide de la description qui suit faite en regard de dessins annexés qui représentent:
- la figure 1, une glace holographique en position opérationnelle ;
- la figure 2, un rangement d'une glace holographique ;
- les figures 3 et 4, une illustration du principe de réalisation d'un dispositif selon l'invention ;
- les figures 5 et 6, un mode possible de réalisation d'un dispositif selon l'invention.

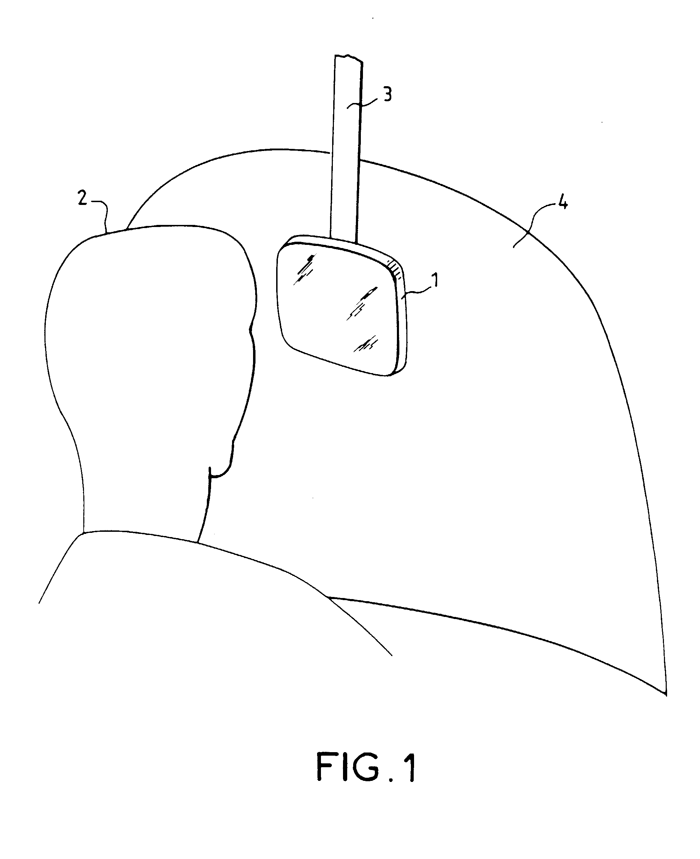

La figure 1 présente une glace holographique 1, en position opérationnelle, située devant les yeux d'un opérateur 2, un pilote d'aéronef par exemple. La glace 1 maintenue par des moyens de fixation 3 partiellement représentés se trouve alors en plein dans le champs de vision 4 de l'opérateur 2, ce champ de vision 4 est par exemple le paysage extérieur vu du cockpit d'un aéronef. En phase opérationnelle, des symboles s'inscrivent par exemple sur la glace holographique 1 pour se superposer au paysage extérieur.

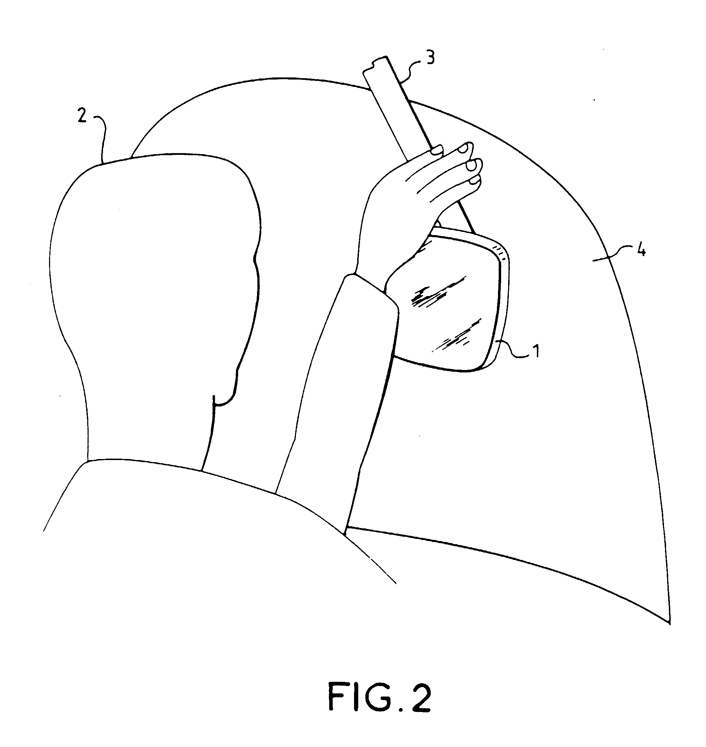

Quand la glace holographique 1 n'est plus en phase opérationnelle, elle devient une gêne pour l'opérateur 2 puisqu'elle masque son champ de vision 4. Comme l'illustre la figure 2, l'opérateur 2, le pilote d'aéronef par exemple, doit alors dégager la glace de son champ de vision si possible en la rangeant hors de ce dernier. Pour des raisons de sécurité et de confort notamment, cette manoeuvre doit se faire le plus aisément et le plus rapidement possible, en particulier dans le cas d'un pilote, tout en assurant un dégagement complet du champ de vision.

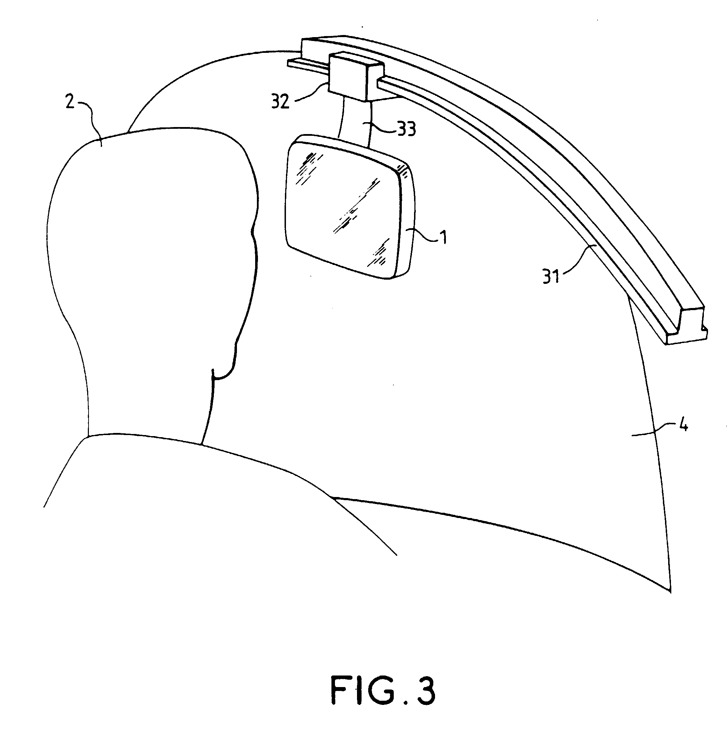

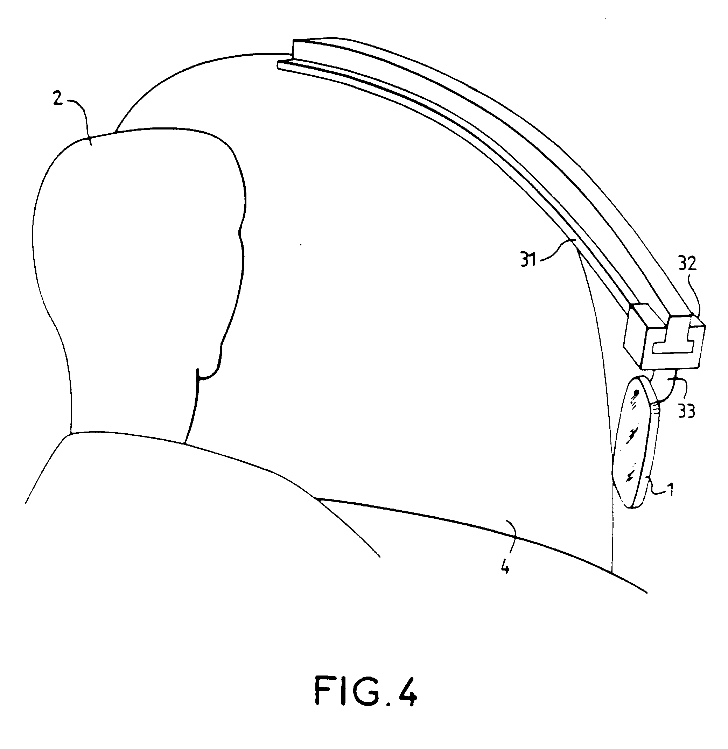

Les figures 3 et 4 illustrent le principe de réalisation d'un dispositif selon l'invention. La figure 3 illustre le cas où la glace holographique 1 est en position opérationnelle, donc située par exemple devant les yeux de l'opérateur 2 ou du moins dans son champ de vision. Le dispositif selon l'invention comporte une glissière courbe 31 dont une partie au moins est située à l'avant de l'opérateur 2 de façon à ce qu'une verticale passant par cette partie coupe le champ de vision de l'opérateur 2. La glissière 31 est par exemple dans une partie de l'espace située au-dessus de l'opérateur. Dans le cas d'une glace holographique utilisée pour un aéronef, la glissière 31 est par exemple fixée sur ou sous la partie pare-brise du cockpit.

Le dispositif selon l'invention comporte encore des moyens 32 pour glisser sur la glissière 31. Ces moyens 32 sont par exemple constitués d'un chariot roulant. Ils sont solidaires de la glace holographique 1, un bras les reliant à cette dernière. La glissière 31 est par exemple disposée de façon à ce que lorsque le chariot ou les moyens 32 pour glisser sont placés à une de ses extrémités, la glace 1 se trouve devant les yeux de l'opérateur 2. Des moyens non représentés sont prévus pour maintenir la glace 1 en position opérationnelle, en maintenant notamment immobile le chariot 32 sur la glissière 31, par blocage de ces derniers sur la glissière par exemple.

La figure 4 présente le dispositif selon l'invention avec la glace holographique 1 non plus en position opérationnelle mais en position rangée, hors du champ de vision 4 de l'opérateur 2. Le chariot 32 est par exemple bloqué à l'extrémité de la glissière 31 de façon à ce que la glace holographique 1 reste maintenue hors du champ de vision de l'opérateur 2. Le fait que la glissière 2 soit courbe permet notamment que la glace 1 se range bien sur le côté de l'opérateur 2, avec un moindre encombrement, sans que celui-ci applique à la glace un mouvement de rotation en plus de la poussée qu'il exerce pour la déplacer sur la glissière 31. En fait, grâce à la courbure de la glissière 31, le guidage du chariot 32 sur cette dernière induit un mouvement de rotation de la glace autour d'un axe passant par l'axe de symétrie de celle-ci. La glace holographique 1 peut ainsi être rangée au centre d'un aéronef, à côté du pilote, entre celui-ci et le copilote par exemple, son plan pouvant être parallèle au plan de symétrie de l'aéronef de façon à perturber le moins possible le champ de vision de l'aéronef. La glace holographique 1 est par exemple liée de façon rigide au chariot 32.

La courbure de la glissière est par exemple calculée de façon à obtenir la rotation voulue de la glace 1, cette rotation permettant de donner à la glace 1 une position et une direction la moins encombrante possible.

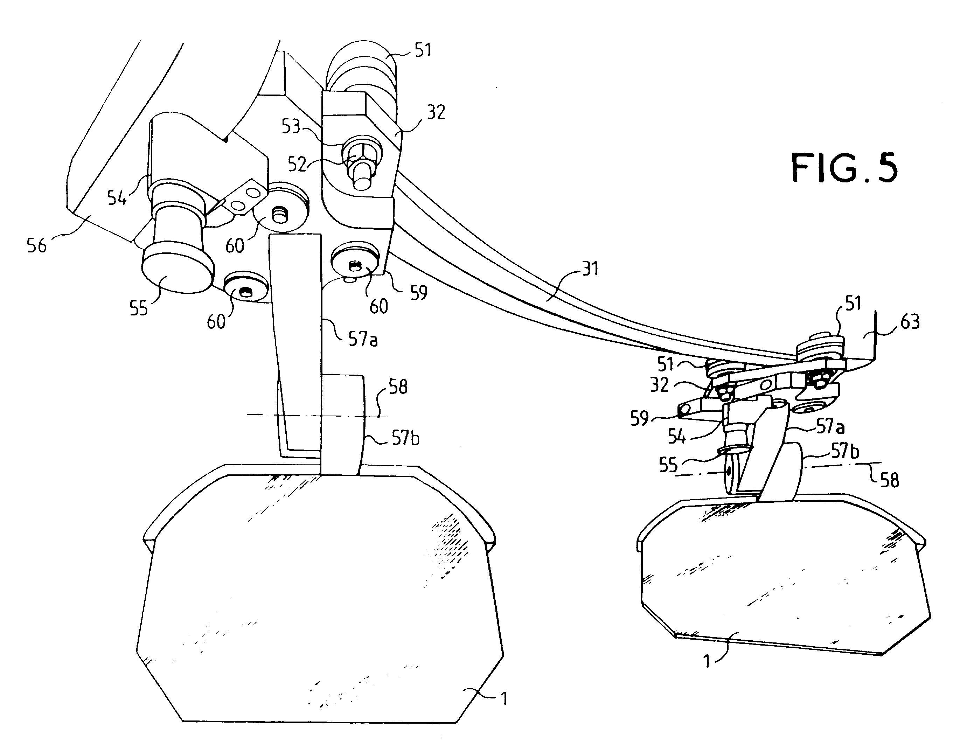

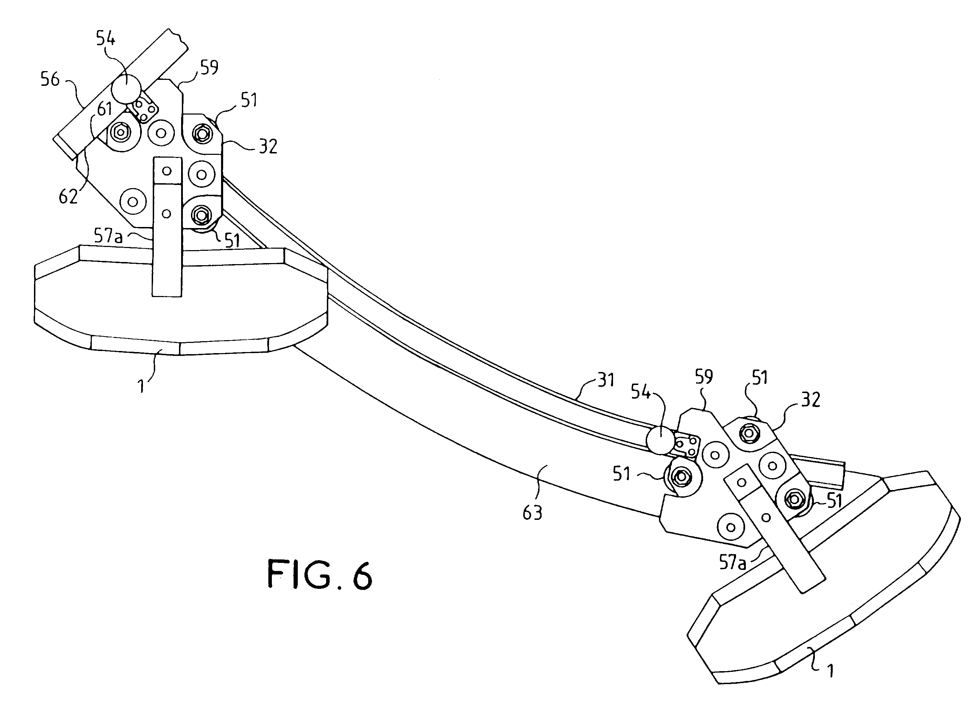

Les figures 5 et 6 illustrent un mode de réalisation possible d'un dispositif selon l'invention dans un exemple d'application à un aéronef, la figure 5 étant une vue en perspective du dispositif et la figure 6 étant une vue de dessous du dispositif. Sur ces figures, la glace holographique 1 est présentée à la fois dans sa position opérationnelle, sur la partie gauche des figures, et dans sa position rangée, sur la partie droite des figures.

Un chariot 32 est guidé par une glissière courbe 31 au moyen de galets 51 roulant le long de cette dernière. Le chariot 32 est par exemple suspendu à trois galets 51, un galet étant placé à l'intérieur de la courbure de la glissière 31 et deux galets 51 étant situés à l'extérieur de sa courbure. Un système d'écrous 52 et de rondelles 53 permet par exemple de fixer le chariot 32 aux galets 51.

Une poignée 54 est par exemple reliée au chariot 32. Cette poignée 54 permet notamment le guidage du chariot 32 le long de la glissière 31 pour une manoeuvre de rangement ou de mise en position opérationnelle de la glacière holographique 1. La poignée 54 est par exemple équipée d'un pion à ressort 55 permettant le verrouillage du chariot pour le maintenir dans une position donnée, de rangement ou opérationnelle notamment, puis le déverrouillage du chariot en cas de changement de place de celui-ci. Pour maintenir la glace holographique 1 en position opérationnelle, le pion à ressort 55 exerce par exemple une pression sur un élément fixe 56 de l'aéronef situé à l'extrémité de la glissière 31.

Un bras de liaison 57a, 57b constitué d'une partie supérieure 57a reliée au chariot 32 et d'une partie inférieure 57b relie la glace holographique 1 au chariot 32. Une articulation schématisée par son axe de rotation 58 réalise la liaison entre les deux parties 57a, 57b du bras de liaison. Une butée fixe, non représentée, placée entre ces deux parties 57a, 57b assure la répétitivité de position de la glace holographique 1 en phase opérationnelle. En cas de choc entre le pilote et la glace holographique par exemple, le dégagement de cette dernière vers l'avant s'effectue par une rotation autour de l'axe 58 de l'articulation entre les deux parties 57a, 57b du bras de liaison. Le couple minimum nécessaire à l'enclenchement de la rotation est relativement faible de façon à ce qu'il ne se produise aucun dommage pour le pilote.

La poignée 54 et la partie supérieure 57a du bras de liaison ne sont par exemple pas directement reliés au chariot 32 mais fixés à un plateau 59 lui-même fixé au chariot 32 par des systèmes à vis 60 par exemple. Ce plateau 59 facilite notamment le démontage du dispositif.

La précision de positionnement du dispositif selon l'invention pour la position opérationnelle est par exemple assurée par deux pions fixes non représentés et un plan de pose 61 liés rigidement à la structure de l'aéronef ainsi que par deux alésages non représentés et un plan de pose 62 solidaire rigidement du chariot 32, les pions étant destinés à se positionner dans les alésages.

La glissière 31 est par exemple fixée sur la structure mécanique du pare-brise 63 ou sous le pare-brise 63 de l'aéronef.

L'exemple de réalisation précédent montre un cas où la glissière 31 est dans une partie supérieure de l'espace, au moins au dessus de la tête de l'utilisateur, la glace holographique 1 étant en dessous de la glissière 31. Il est cependant envisageable de placer la glissière dans une partie inférieure de l'espace, la glace holographique 1 étant en dessus de la glissière 31.

Le déplacement du chariot 32 peut par exemple être automatisé par l'utilisation d'un moteur. Un moteur électrique peu encombrant peut alors être placé sur le chariot, ce moteur entraînant la rotation des galets 51 et donc le déplacement du chariot sur la glissière 31. Le moteur est par exemple commandé par un signal électrique de mise en marche, ce signal émanant du pilote. Ce signal électrique peut être transmis de différentes manières. Soit simplement par un fil simple reliant le moteur à un organe de commande, soit par une liaison sans fil de type hyperfréquence à l'aide notamment d'une source d'onde commandée par le pilote, soit encore par un signal vocal émis par le pilote, le chariot contenant alors des circuits d'interfaçage connus de l'homme du métier permettant de transformer le signal vocal en signal électrique de commande du moteur. Dès que la position voulue du chariot 32 est obtenue, rangée ou opérationnelle, le moteur s'arrête par exemple automatiquement. La simplicité mécanique du dispositif selon l'invention permet non seulement son utilisation manuelle de façon simple et rapide, le déverrouillage de la position opérationnelle, la manoeuvre de rangement et le verrouillage pouvant se faire avec une seule prise de mains, mais aussi son activation automatique sans faire appel à un système compliqué. Dans tous les cas, la structure de l'ensemble du dispositif reste simple pour une efficacité remarquable.

## Revendications

1. Dispositif de rangement d'une glace holographique (1), caractérisé en ce qu'il comporte au moins une glissière courbe (31), des moyens (32) pour glisser sur la glissière d'une position donnée quelconque à une position donnée de rangement, ces moyens étant adaptés pour recevoir de manière solidaire la glace (1) holographique, et des moyens pour maintenir la glace (1) holographique dans la position de rangement.

2. Dispositif selon la revendication 1, caractérisé en ce que les moyens (32) pour glisser sont aptes à être liés rigidement à la glace holographique (1).

3. Dispositif selon l'une quelconque des revendications précédentes, caractérisé en ce que la glissière (31) est fixée sur la structure mécanique du pare-brise d'un aéronef.

4. Dispositif selon l'une quelconque des revendications 1 ou 2, caractérisé en ce que la glissière (31) est fixée sous le pare-brise d'un aéronef.

5. Dispositif selon l'une quelconque des revendications précédentes, caractérisé en ce que les moyens pour glisser sont constitués d'un chariot (32) fixé à des galets (51) roulant le long de la glissière (31).

6. Dispositif selon la revendication 5, caractérisé en ce que le chariot (32) comporte une poignée (54) munie d'un pion à ressort (55) de verrouillage et de déverrouillage pour maintenir le chariot (32) dans une position donnée.

7. Dispositif selon l'une quelconque des revendications 5 ou 6 caractérisé en ce que le chariot (32) est apte à être relié à la glace holographique (1), en comportant un bras de liaison comprenant une partie supérieure (57a) et une partie inférieure (57b) s'articulant autour d'un axe (58), une butée entre les deux parties assurant la répétivité de position de la glace holographique (1).

8. Dispositif selon la revendication 7, caractérisé en ce que la glace holographique (1) est dégagée vers l'avant par une rotation autour de l'axe (58) d'articulation à partir d'un couple minimum appliqué sur la glace (1).

9. Dispositif selon l'une quelconque des revendications précédentes, caractérisé en ce que la glace holographique (1) est déplacée d'une position opérationnelle à une position de rangement et vice-versa.

10. Dispositif selon l'une quelconque des revendications précédentes, caractérisé en ce que les moyens (32) pour glisser sont mûs par un moteur électrique commandable.

## Patentansprüche

1. Vorrichtung zum Verstauen einer holographischen Scheibe, dadurch gekennzeichnet, daß sie mindestens eine gekrümmte Schiene (31), Mittel (32), die auf der Schiene von einer beliebigen gegebenen Stellung in eine Verwahrstellung geführt werden können und geeignet sind, um mit der holographischen Scheibe fest verbunden werden zu können, sowie Mittel aufweist, um die holographische Scheibe in der Verwahrstellung zu halten.

2. Vorrichtung nach Anspruch 1, dadurch gekennzeichnet, daß die geführten Mittel (32) mit der holographischen Scheibe (1) starr verbunden werden können.

3. Vorrichtung nach einem beliebigen der vorstehenden Ansprüche, dadurch gekennzeichnet, daß die Schiene (31) an der mechanischen Struktur des Fensters eines Flugzeugs befestigt ist.

4. Vorrichtung nach einem beliebigen der Ansprüche 1 und 2, dadurch gekennzeichnet, daß die Schiene (31) unter dem Fenster eines Flugzeugs befestigt ist.

5. Vorrichtung nach einem beliebigen der vorstehenden Ansprüche, dadurch gekennzeichnet, daß die geführten Mittel von einem Wagen (32) gebildet werden, der an entlang der Schiene (31) laufenden Rollen (51) befestigt ist.

6. Vorrichtung nach Anspruch 5, dadurch gekennzeichnet, daß der Wagen (32) einen Griff (54) aufweist, der einen federbelasteten Stift (55) zur Verriegelung und Entriegelung besitzt, um den Wagen (32) in einer gegebenen Stellung zu arretieren.

7. Vorrichtung nach einem beliebigen der Ansprüche 5 und 6, dadurch gekennzeichnet, daß der Wagen (32) an der holographischen Scheibe (1) befestigt werden kann, indem er einen Verbindungsarm mit einem oberen Teil (57a) und einem unteren Teil (57b) enthält, die um eine Achse (58) gelenkig verbunden sind, wobei ein Anschlag zwischen den beiden Teilen die Reproduzierbarkeit des Lage der holographischen Scheibe (1) gewährleistet.

8. Vorrichtung nach Anspruch 7, dadurch gekennzeichnet, daß die holographische Scheibe (1) durch Schwenkung um die Gelenkachse (58) nach vorne ausweicht, wenn ein Mindestdrehmoment auf die Scheibe (1) ausgeübt wird.

9. Vorrichtung nach einer beliebigen der vorstehenden Ansprüche, dadurch gekennzeichnet, daß die holographische Scheibe (1) von einer Betriebsstellung in eine Verwahrstellung und umgekehrt verschoben wird.

10. Vorrichtung nach einem beliebigen der vorstehenden Ansprüche, dadurch gekennzeichnet, daß die geführten Mittel (32) von einem steuerbaren elektrischen Motor bewegt werden.

## Claims

1. Device for storing a holographic mirror (1), characterized in that it comprises at least one curved slideway (31), means (32) for sliding along the slideway from any given position to a given storage position, these means being designed to securely accommodate the holographic mirror (1), and means for keeping the holographic mirror (1) in the storage position.

2. Device according to Claim 1, characterized in that the means (32) for sliding are designed to be rigidly connected to the holographic mirror (1).

3. Device according to either one of the preceding claims, characterized in that the slideway (31) is fixed to the mechanical structure of an aircraft windscreen.

4. Device according to either one of Claims 1 and 2, characterized in that the slideway (31) is fixed beneath an aircraft windscreen.

5. Device according to any one of the preceding claims, characterized in that the means for sliding consist of a carriage (32) fixed to rollers (51) rolling along the slideway (31).

6. Device according to Claim 5, characterized in that the carriage (32) comprises a handle (54) fitted with a locking and unlocking spring pin (55) for holding the carriage (32) in a given position.

7. Device according to either one of Claims 5 and 6, characterized in that the carriage (32) is designed to be connected to the holographic mirror (1) by comprising a linking arm comprising an upper part (57a) and a lower part (57b) articulated about an axis (58), a stop between the two parts ensuring that the position of the holographic mirror (1) is repeatable.

8. Device according to Claim 7, characterized in that the holographic mirror (1) is brought out forwards by rotation about the axis (58) of articulation after a minimum torque has been applied to the mirror (1).

9. Device according to any one of the preceding claims, characterized in that the holographic mirror (1) is moved from an operational position into a storage position, and vice versa.

10. Device according to any one of the preceding claims, characterized in that the means (32) for sliding are moved by a controllable electric motor.
